# EUROPEAN PATENT SPECIFICATION

(11) **EP 1 956 797 B1**
(45) Date of publication and mention of the grant of the patent: **19.08.2009**
(21) Application number: 08154243.3
(22) Date of filing: 31.03.2005
(51) Int. Cl.: H04L 29/06

(54) **Privacy Protection for Mobile Internet Protocol Sessions**
Privatsphärenschutz für mobile Internetprotokollsitzungen
Protection de la confidentialité pour sessions de protocole Internet mobiles

(43) Date of publication of application: 13.08.2008
(62) Divisional of application: 05252029.3
(73) Proprietor: Panasonic Corporation, Kadoma-shi Osaka 571-8501 (JP)
(72) Inventor: Antoine, Stephane, Reading, Fife RG4 7SY (GB); Kasapidis, Makis, Markinch, Fife KY7 6DS (GB)
(74) Representative: Haley, Stephen

(56) References cited:
- EP-A- 1 432 198
- WO-A-03/030488
- US-A1- 2004 148 364
- NARTEN T ET AL: "RFC 3041: Privacy Extensions for Stateless Address Autonconfiguration in IPv6" IETF REQUEST FOR COMMENTS, 1 January 2001 (2001-01-01), pages 1-17, XP002181525

## Description

The present invention relates to mobile communications, and particularly to mobile internet communications.

In such communications privacy is a general term to designate the claim of individuals to determine for themselves when, how, and to what extent information about themselves is communicated to others. Such privacy is usually considered to encompasse several properties, which are *Anonymity, Pseudonimity, unlinkabilty* and *location privacy.*

Anonymimity ensures that a user may use a resource or service without disclosing it.

Pseudonimity ensures that a user may use a resource or service without disclosing its user identity, but still can be accountable for that use.

Unlinkability ensures that a user may make use of resources or services without others being able to link these two uses together.

Location privacy means the capability of a mobile node to conceal the relationship between its location and any personal identifiable information from third parties.

In the latest protocols, such as IPv6, addresses generated using stateless address auto-configuration contain an embedded 64-bit interface identifier, which remains constant over time. This can be a problem for privacy as anytime a fixed identifier is used in multiple contexts, it becomes possible to correlate seemingly unrelated activity using this identifier. Attackers who are present in the path between the communicating peers can view the constant address present in the datagrams and perform this correlation. To solve this problem and provide unlinkability, a privacy extension for IPv6 has been proposed. Such privacy extension for stateless address auto-configuration allows IPv6 addresses to have their interface ID change randomly at periodic intervals of time. A temporary address whose interface ID changes periodically makes it more difficult for indiscrete information collectors in the Internet domain to correlate when different transactions actually correspond to the same node/user.

Mobile Ipv6 utilizes a node with an address that does not change as the home agent. Whenever the mobile node moves to a new subnet and acquires a new IP address, called a care of address (CoA), it notifies the home agent of the new address. Packets addressed to the unchanged home agent are tunnelled by the home agent to the latest CoA being used by the mobile node. The notification of the home agent is called a binding update. The binding update contains a Constant Home Address (HoA), to which the mobile node is always addressable. A Binding Acknowledgement (BACK) is sent in response to the binding update and contains the same HoA in its routing header.

As IPsec protects the binding update and the BACK between the mobile node and its home access, a constant Security Parameter Index (SPI) identifying each one-way security association is apparent in the binding update and the BACK.

Accordingly, the latest protocols sessions, such as Mobile IPv6 sessions do not benefit from the address change offered by privacy extension in other protocols because the constant home address present in its Mobility option, together with the security parameter index, allows correlation of sessions even when the Care of Address (CoA) changes.

According to the present invention there is provided a method of establishing communication protocols between a mobile node and a home agent in a mobile communications network, the method comprising the steps of:
generating, at the mobile node plural care of addresses (CoAs) and a corresponding number of security parameter indices;
sending the generated CoAs and security parameter indices to the home agent in an encypted form;
generating, at the home agent, on the basis of the received CoAs and security parameter indices, an equal number of home addresses (HoAs) and associated security parameter indices;
sending the list of HoAs and associated security parameter indices generated at the home agent to the mobile node, and;
using the generated CoAs and HoAs in pairs along with the associated security parameter indices as the basis for communication protocol addresses and encryption for communication between the home agent and the mobile node,
wherein a new CoA-HoA pair and corresponding security parameter index are used for every new communication session between the mobile node and the home agent.

The present invention also provides a system arranged to employ the above method and a mobile node used in the system.

The present invention addresses the problem of linkability in relation to protocols such as Mobile IPv6. Currently a third party that can intercept packets between the mobile node and the home agent can correlate the various sessions of a given user.

In the present invention, a mobile node and its home access point agree beforehand on the use of a number of sets of CoA, HoA, and Security Parameter Indices which are used for every new session. Each IP address should be unique and a check for such uniqueness can only be run at the local link where the address will be used. Also, although the Security Parameter Index is written in a packet by the sending node it must be unique for all the sessions at the receiving node so Security Parameter Indices must be generated by the receiving node and communicated to the sending node.

One example of the present invention will now be described with reference to the accompanying drawing, in which figure one is a schematic diagram showing a system according to the present invention.

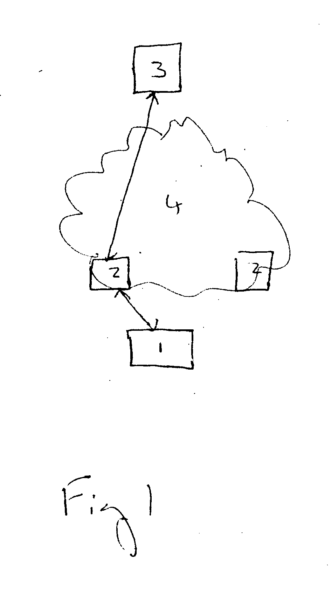

Referring to figure 1, a system according to the present invention comprises a mobile node 1 which can connect, dependent upon its location, with one of a number of local subnets 2 to communicate with a home agent 3 via a network 4 such as the Internet. The mobile node 1 may be any one of a number of mobile communication devices, such as a portable or handheld computer or mobile telephone.

The invention employs a method which comprises the following steps. Firstly, the mobile node 1 generates a number of care of addresses (CoAs) upon arrival at the new subnet 2. For each address selected, duplicate address detection is performed on the subnet network. The mobile node 1 also generates an equal number of Security Parameter Indices.

The list of CoAs and corresponding Security Parameter Indices is sent to the home agent 3 encrypted as an option in the binding update message that must be sent every time the mobile node 1 moves to a new subnet 2.

The home agent 3, upon receipt of the binding update, generates a number of HoAs and performs duplicate address detection for each one of them. The home agent 3 also generates an equal number of Security Parameter Indices.

The list of HoAs and Security Parameter Indices is sent to the mobile node 1 encrypted in the BACK message as options.

The security selectors at the mobile node 1 and the home agent 3 are then updated so that packets corresponding to all pairs (CoA-HoA) for a given mobile node 1 use the same security association and communication can commence.

Then, when the mobile node 1 initiates a new session, it uses the next unused pair of CoA-HoA addresses and corresponding Security Parameter Index. Each pair of (CoA-HoA) is only used once per transaction.

Similarly, for a new session initiated by a correspondent node that uses the home agent 3 to contact the mobile node 1, the home agent 3 will use a new set of CoA-HoA to tunnel the packets to the mobile node 1.

With the above method the home agent 3 can be configured also to be monitoring for the next pair of CoA-HoA on its connections so that any change can be effected without undue delay.

As will be appreciated from the above, the present invention enables the provision, even with mobile protocols, of unlinkable privacy communication without the need for high levels of data communication between the mobile node 1 and home agent 3.

## Claims

1. A home agent that is used in a mobile communication system comprising a mobile node and at least one subnet node for connecting therebetween via a network, the home agent comprising:
means for receiving from a mobile node (1) plural case of addresses, CoAs, and a corresponding number of security parameter indices; and
means for generating on the basis of the received CoAs and security parameter indices, a corresponding number of HoAs and associated security parameter indices; and
means for sending the HoAs and associated security parameters indices to the mobile node;
wherein the home agent is arranged to communicate, with the mobile node on the basis of protocols employing the generated CoAs, HoAs and associated security parameter indices; and
wherein a new CoA-HoA pair and corresponding security parameter index are used for every new communication session between the mobile node and the home agent.

2. A mobile node (1) that is used in a mobile communication system having a home agent (3) and at least one subnet node (2) for connecting therebetween via a network (4), the mobile node comprising:
means for generating plural care of addresses, CoAs, and a corresponding number of security parameter indices;
means for sending the generated CoAs and security parameter indices to the home agent;
means for receiving a corresponding numberof home addresses, HoAs, and associated security parameter indices, which are generated by and sent from the home agent on the basis of the received CoAs and security parameter indices; and
means for choosing a CoA and a paired HoA along with an associated security parameter index;
wherein the mobile node is arranged to communicate with the home agent on the basis of protocols employing the generated CoAs, HoAs and associated security parameter indices; and
the mobile node uses the next unused pair of CoA-HoA addresses and corresponding security parameter index for each new communication session between the mobile node and the home agent.

## Patentansprüche

1. Home Agent, der in einem mobilen Kommunikationssystem verwendet wird, das über einen mobilen Knoten und wenigstens einen Teilnetzknoten verfügt, um eine Verbindung zwischen beiden über ein Netzwerk herzustellen, wobei der Home Agent enthält:
eine Einrichtung, die von einem mobilen Knoten (1) mehrere CoAs (Care Of Adresses) und eine entsprechende Zahl von Sicherheitsparameterindizes empfängt; und
eine Einrichtung, die auf der Basis der empfangenen CoAs und der Sicherheitsparameterindizes eine entsprechende Anzahl von HoAs und zugeordnete Sicherheitsparameterindizes erzeugt; und
eine Einrichtung, die die HoAs und die zugehörigen Sicherheitsparameterindizes zu dem Mobilen Knoten sendet;
wobei der Home Agent dazu eingerichtet ist, mit dem mobilen Knoten auf der Basis von Protokollen zu kommunizieren, die die erzeugten CoAs, HoAs und die zugehörigen Sicherheitsparameterindizes verwenden; und
wobei ein neues CoA-HoA-Paar und ein entsprechender Sicherheitsparameterindex für jeden neuen Kommunikationsvorgang zwischen dem mobilen Knoten und dem Home Agent verwendet werden.

2. Mobiler Knoten (1), der in einem mobilen Kommunikationssystem verwendet wird, das über einen Home Agent (3) und wenigstens einen Teilnetzknoten (2) verfügt, um eine Verbindung zwischen beiden über ein Netzwerk (4) herzustellen, wobei der mobile Knoten enthält:
eine Einrichtung, die eine Vielzahl von CoAs (Care Of Adresses) und eine entsprechende Anzahl von Sicherheitsparameterindizes erzeugt,
eine Einrichtung, die die erzeugten CoAs und die Sicherheitsparameterindizes zu dem Home Agent sendet;
eine Einrichtung, die eine entsprechende Anzahl von HoAs (Home Adresses) und zugehörige Sicherheitsparameterindizes empfängt, die von dem Home Agent auf der Basis der empfangenen CoAs und der Sicherheitsparameterindizes erzeugt und gesendet werden; und
eine Einrichtung, die eine CoA und eine gepaarte HoA zusammen mit einem zugehörigen Sicherheitsparameterindex wählt;
wobei der mobile Knoten dazu eingerichtet ist, mit dem Home Agent auf der Basis von Protokollen zu kommunizieren, die die erzeugten CoAs, HoAs und die zugehörigen Sicherheitsparameterindizes verwenden; und
der mobile Knoten das nächste unbenutzte Paar aus CoA-HoA-Adressen sowie den entsprechenden Sicherheitsparameterindex für jeden neuen Kommunikationsvorgang zwischen dem mobilen Knoten und dem Home Agent verwendet.

## Revendications

1. Agent nominal qui est utilisé dans un système de communication mobile comprenant un noeud mobile et au moins un noeud de sous-réseau pour une connexion entre eux par l'intermédiaire d'un réseau, l'agent nominal comprenant :
des moyens pour recevoir, d'un noeud mobile (1), plusieurs CoAs (care of addresses) et un nombre correspondant d'index de paramètres de sécurité ; et
des moyens pour générer, sur la base des CoAs et des index de paramètres de sécurité reçus, un nombre correspondant de HoAs et d'index de paramètres de sécurité associés ; et
des moyens pour envoyer les HoAs et les index de paramètres de sécurité associés au noeud mobile ;
dans lequel l'agent nominal est agencé pour communiquer avec le noeud mobile sur la base de protocoles utilisant les CoAs, les HoAs et les index de paramètres de sécurité associés générés ; et
dans lequel une nouvelle paire CoA-HoA et un index de paramètres de sécurité correspondant sont utilisés pour chaque nouvelle session de communication entre le noeud mobile et l'agent nominal.

2. Noeud mobile (1) qui est utilisé dans un système de communication mobile comportant un agent nominal (3) et au moins un noeud de sous-réseau (2) pour une connexion entre eux par l'intermédiaire d'un réseau (4), le noeud mobile comprenant :
des moyens pour générer plusieurs CoAs (care of addresses) et un nombre correspondant d'index de paramètres de sécurité ;
des moyens pour envoyer les CoAs générées et les index de paramètres de sécurité à l'agent nominal ;
des moyens pour recevoir un nombre correspondant d'adresses nominales, HoAs, et d'index de paramètres de sécurité associés, qui sont générés et envoyés par l'agent nominal sur la base des CoAs et des index de paramètres de sécurité reçus ; et
des moyens pour choisir une CoA et une HoA appariée avec un index de paramètres de sécurité associé ;
dans lequel le noeud mobile est agencé pour communiquer avec l'agent nominal sur la base de protocoles utilisant les CoAs, les HoAs et les index de paramètres de sécurité associés générés ; et
le noeud mobile utilise la paire non utilisée suivante d'adresses CoA-HoA et un index de paramètres de sécurité correspondant pour chaque nouvelle session de communication entre le noeud mobile et l'agent nominal.
